# EUROPÄISCHE PATENTANMELDUNG

(11) **EP 0 616 021 A1**
(43) Veröffentlichungstag der Anmeldung: **21.09.1994**
(21) Anmeldenummer: 94108572.2
(22) Anmeldetag: 31.07.1992
(51) Int. Cl.: C09K 21/12, C09K 21/04

(54) **Verwendung von Brandschutzgelen für Brandschutzverglasungen**

(30) Priorität: 13.08.1991 DE 4126702
(62) Teilanmeldung aus: 92113084.5
(71) Anmelder: BAYER AG, 51368 Leverkusen (DE); Schott Glaswerke, D-55122 Mainz (DE)
(72) Erfinder: von Bonin, Wulf, Dr., D-51519 Odenthal (DE); von Gizycki, Ulrich, Dr., D-51379 Leverkusen (DE); Leroux, Roland, Dr., D-55271 Stadecken-Elsheim (DE); Karschti, Thomas M., D-55257 Budenheim (DE); Thürk, Jürgen, Dr., D-55288 Schonsheim (DE)

(57) **Zusammenfassung**

Brandschutzgele auf der Basis von Aminsalzen saurer Phosphate, dadurch gekennzeichnet, daß sie eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden, die bei Erhitzen auf Temperaturen über 45°C in weniger als 24 Stunden in ein durchsichtiges Gel übergeht, werden für Brandschutzverglasungen verwendet.

## Beschreibung

Die vorliegende Erfindung bezieht sich auf die Verwendung bestimmter Brandschutzgele für Brandschutzverglasungen.

Die Verwendung von zumeist Wasser enthaltenden Gelen als Zwischenschichten in Verbundglaskonstruktionen ist bekannt. Im allgemeinen werden dabei Alkalisilikatgele verwendet oder Gele auf der Basis organischer Polymerisate. Erstere haben den Nachteil, daß sie im Brandfall aufgrund des Alkaligehaltes bei hohen Temperaturen das Durchschmelzen oder das Wegfließen des Glases begünstigen, letztere haben den Nachteil, daß sie nach Abdampfen des Wassers verbrennen und das Glas ungeschützt zurücklassen.

Intumeszenzträger, auch solche in fester Form, die Ammonium- und/oder Aminsalze von sauren Phosphaten von Metallen der 2. und/oder 3. Gruppe des Periodensystems der Elemente enthalten, sind Gegenstand einer eigenen älteren Patentanmeldung. Demgegenüber wurde jetzt die Verwendung von Brandschutzgelen für Brandschutzverglasungen gefunden, wobei die Gele bei ungefähr Raumtemperatur relativ niedrig viskos, d.h. fließfähig, sind und bei höherer Temperatur durchsichtige Gele bilden.

Erfindungsgemäß zu verwendende Brandschutzgele auf der Basis von Aminsalzen saurer Phosphate sind dadurch gekennzeichnet, daß sie eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden, die beim Erhitzen auf Temperaturen über 45°C in weniger als 24 Stunden in ein durchsichtiges Gel übergeht.

Eine bevorzugte Aluminiumkomponente ist Aluminiumhydroxid, eine bevorzugte Phosphorkomponente ist ortho-Phosphorsäure und bevorzugte Aminkomponenten sind Anlagerungsprodukte von Epoxiden an Ammoniak, primäre und/oder sekundäre Mono- und/oder Polyamine, z.B. Ethanolamin.

Erfindungsgemäß zu verwendende Brandschutzgele auf der Basis von Aminsalzen saurer Phosphate können hergestellt werden, indem man aus einer Aluminiumverbindung und ortho-Phosphorsäure ein saures Aluminiumphosphat herstellt und dieses in 20 bis 85 gew.-%iger wäßriger Lösung mit einem Aminoalkohol umsetzt, wobei folgende Mengenverhältnisse eingehalten werden
- pro Mol Aluminiumverbindung 2 bis 4 Mol ortho-Phosporsäure und
- pro 100 Gramm saures Aluminiumphosphat in 20 bis 85 gew.-%iger wäßriger Lösung 0,5 bis 1,5 Mole Aminoalkohol.

Vorzugsweise werden pro Mol Aluminiumverbindung 2,5 bis 3 Mol ortho-Phosphorsäure eingesetzt und pro 100 Gramm saures Aluminiumphosphat 0,9 bis 1,3 Mol Aminoalkohol.

Wenn man beispielsweise von einer 20 gew.-%igen wäßrigen Lösung eines Aluminium-tris-phosphates ausgeht, kann man beispielsweise pro 100 Gew.-Teile Phosphat-Feststoff 45 bis 65 Gew.-Teile, vorzugsweise 50 bis 60 Gew.-Teile Ethanolamin einsetzen. Wenn man beispielsweise von einer 80 gew.-%igen wäßrigen Lösung eines Aluminium-tris-phosphates ausgeht, kann man beispielsweise 30 bis 70 Gew.-Teile, vorzugsweise 45 bis 65 Gew.-Teile Ethanolamin pro 100 Gew.-Teile Phosphat-Feststoff einsetzen. Bei anderen Konzentrationen an Aluminium-tris-phosphat-Lösungen beispielsweise und vorzugsweise einzusetzende Ethanolamin-Mengen lassen sich durch lineare Interpolation zwischen den obengenannten Eckdaten ermitteln.

Als Aminoalkohol-Komponente für erfindungsgemäß zu verwendende Brandschutzgele kommen vor allem Anlagerungsprodukte von Epoxiden, vorzugsweise von Ethylenoxid und/oder Propylenoxid an Ammoniak, primäre und/oder sekundäre, aliphatische, aromatische und/oder araliphatische Mono- und/oder Polyamine in Frage. Bevorzugt sind solche Anlagerungsprodukte an Mono- und/oder Dialkylamine mit 1 bis 24 C-Atomen pro Alkylrest, beispielsweise Anlagerungsprodukte von Ethylenoxid und/oder Propylenoxid an Methylamin, Ethylamin, Propylamin, Butylamin, Oleylamin, Anilin und Polyalkylen-Polyamin, beispielsweise Polyethylen-Polyamin. Besonders bevorzugt sind Ethanolamine, insbesondere Mono-Ethanolamin.

Die beschriebenen Herstellungsverfahren liefern Brandschutzgele, die bei 5 bis 30°C mehr als 24 Stunden fließfähig sind und bei Erhitzung auf Temperaturen über 45°C in weniger als 24 Stunden in eine Klar durchsichtige, hochviskose, i.a nicht mehr fließfähige, gelierte Form übergehen.

Beispielsweise kann man erfindungsgemäß zu verwendende Brandschutzgele als Zwischenschichten in Verbundglaskonstruktionen mit Brandschutzwirkung einsetzen.

Vor der Gelierung können den erfindungsgemäß zu verwendenden Produkten gegebenenfalls weitere Stoffe zugesetzt werden. Beispielsweise kommen hierfür in Betracht: Füllstoffe, z.B. in Form von Pulvern, Flakes, (Hohl)Perlen oder Granulaten, bei denen es sich beispielsweise handeln kann um Gläser, Graphite, geblähte und/oder blähfähige Graphite, Kohlenstoffpartikel, Kohlenstoff-Fasern, Mineralfasern, Glimmer, sonstige Silikate, Titandioxid, Perlite, Vermikulite, Asbeste, Kieselsäuren, Quarze, Alumosilikate und/oder Borsilikate. Es kommen auch Farbgeber, Lichtschutzmittel, Radikalfänger, Substanzen mit speziellen Absorptionseigenschalten zur Erzielung von Filter- oder Verdunkelungseffekten im elektromagnetischen Spektrum, Metallpulver, Metallfasern oder Metallflakes, Cellulose, Stärke, Zucker, Polyole, Photochromiebildner, Nukleierungsmittel (zur Initiierung und Vergleichmäßigung des Aufschäumens im Beflammungsfalle), Biocide und/oder Geruchsstoffe in Frage. Solche weiteren Stoffe können in den Brandschutzgelen, beispielsweise insgesamt in Mengen von 0 bis 60 Gew.-%, vorhanden sein.

Besonders bevorzugt werden erfindungsgemäß zu verwendende Brandschutzgele zur Herstellung von Zwischenschichten in ein- oder mehrlagigen Glasverbundkonstruktionen verwendet, wobei man so verfahren kann, daß man das Brandschutzgel vor der Gelierung in fließfähiger Form zwischen Glasplatten bringt und dann durch eine Temperung bei über 45°C zur Gelietung bringt. Man kann auch so verfahren, daß man das Brandschutzgel vor der Gelierung zur Beschichtung von Glasplatten verwendet und vor oder nach der Gelierung die gegebenenfalls mit einer Konzentrationserhöhung durch Trocknen verbunden sein kann, zu einem ein- oder mehrlagigen Glasplattenverbund zusammenfügt.

Ein weiterer Weg zur Herstellung eines Glasplattenverbunds besteht darin, daß man die Umsetzungsprodukte aus Aluminiumphosphat und Aminoalkohol weitgehend oder vollständig wasserfrei macht, nach thermoplastischen Verarbeitungsverfahren gegebenenfalls unter Mitverwendung von Trägerfolien in Folienform überführt, so auf die Glasplatten aufbringt und diese dann zu einer Verbundkonstruktion zusammenfügt.

Bei dem Glas zur Herstellung von solchen Verbundglaskonstruktionen kann es sich z.B. um Glasscheiben aus Floatglas, Fensterglas, drahtverstärktem Glas, feuerfestem Glas, Quarzglas, Kunststoffglas und/oder Glaskeramik handeln.

Glasverbundmaterialien, die erfindungsgemäße Brandschutzgele enthalten, können z.B. den Aufbau Glas/Gelschicht/Glas/Gelschicht/Glas aufweisen, also ein 3-Scheibenverbund sein. Gegebenenfalls kann es sich auch um einen 4-Scheibenverbund handeln. Die Dicke und der Materialcharakter der verschiedenen Gläser und/oder Gelschichten kann variiert werden, die Dicke z.B. zwischen 0,05 und 25, vorzugsweise zwischen 0,1 und 10 mm. Der Gelcharakter der erfindungsgemäßen Zwischenschichten ist schon allein deswegen vorteilhaft, weil die Verbundglaskonstruktion bei Beschädigung nicht auslaufen kann. Die erfindungsgemäßen Zwischenschichten sind durch ihren ausgesprochenen Gelcharakter nicht mehr fließfähig.

Die Zwischenschichten sind insbesondere dann nicht mehr fließfähig und haben einen besonders ausgeprägten Gelcharakter, wenn bei Mengenverhältnissen gearbeitet worden ist, die innerhalb der oben angegebenen Vorzugsbereiche der Einsatzmengen von Aluminiumphosphat und Aminoalkohol liegen.

Der Wassergehalt der Zwischenschichtmaterialien kann frei gewählt werden und kann sich nach den konstruktiven Gegebenheiten des Einsatzgebietes und den zu erwartenden thermischen Belastungen richten. Beispielsweise kann man 40 bis 100 gew.-%ige, vorzugsweise 50 bis 85 gew.-%ige Zubereitungen von erfindungsgemäß einzusetzenden Aminsalzen saurer Phosphate verwenden.

Zusätzlich zu Aminoalkoholen können bei der Umsetzung mit Aluminiumphosphat auch Alkalien oder Erdalkalien eingesetzt werden. Vorzugsweise wird jedoch ohne solche Zusätze oder mit nur geringen Mengen solcher Zusätze gearbeitet, z.B. weniger als 10 Gew.-%, bezogen auf das Amin.

Wenn eine Verbundglaskonstruktion mit erfindungsgemäßen Zwischenschichten, die Wasser enthalten, beflammt wird, bekommt die flammenseitige Glasscheibe Risse. Im Bereich der Risse strömt Wasserdampf ab und kühlt die Verbundglaskonstruktion. Gleichzeitig werden solche Risse durch den im Zwischenschichtmaterial enthaltenen Feststoff verstopft, so daß kaum Materialverluste entstehen. Im Beflammungsverlauf trübt sich das Zwischenschichtmaterial zwischen den Glasscheiben, und es bildet sich auf der flammseitigen Glasscheibe eine Schicht aus Zwischenschichtmaterialpyrolysat, die den Strahlungsdurchtritt vermindert. Weiterhin beginnt das Zwischenschichtmaterial im Beflammungsbereich zu intumeszieren und bildet einen mineralisierten Schaum, der eine Isolation sowohl gegen Wärmedurchtritt als auch gegen Durchtritt sonstiger Strahlung darstellt. Fernerhin füllt der sich bildende Intumeszenzschaum eventuelle Materialverluste im Zwischenschichtbereich wieder isolierend aus, so daß eine Art Selbstheilungseffekt eintritt. Nach längerer Beflammung wird der in den Zersetzungsprodukten enthaltene Kohlenstoff verbrannt und es bildet sich flammenseitig eine weiße, thermisch beständige Mineralschicht aus, die Wärme und Strahlung in den Brandraum zurückreflektiert.

Die Gesamtheit dieser bei Beflammung ablaufenden Prozesse führt bereits bei einem Zweischeibenverbund, besonders aber bei einem Drei- oder Vierscheibenverbund, zu sehr gutem Brandwiderstandsverhalten der mit erfindungsgemäßen Zwischenschichten versehenen Verbundgläser. Beispielsweise lassen sich bei Fensterglas-Dreischeibenverbunden mit 3-5 mm Zwischenschichten Feuerwiderstandsklassierungen im Bereich von F 30 in Anlehnung an DIN 4102 erreichen.

Die Herstellung solcher Scheibenverbunde kann beispielsweise erfolgen, indem man die Vorstufe des erfindungsgemäßen Brandschutzgels fließfähig bei Temperaturen unter 30°C herstellt, diese gegebenenfalls filtriert und/oder entgast, dann zwischen die Scheiben eines vorfabrizierten Scheibenglasverbundes blasenfrei eingießt und bei beispielsweise 50 bis 120°C, vorzugsweise 60 bis 90°C, das fließfähige Vorprodukt zur Gelierung bringt. Ein dabei gegebenenfalls auftretender Schwund kann durch Nachdrücken von Gelbildnern kompensiert werden. Abschließend kann man die Einfüllöffnung beispielsweise mit einer Kittmasse verschließen.

Es ist auch möglich, den Gelbildner auf Glasplatten plan aufzugießen, gegebenenfalls zu trocknen und vor oder nach erfolgter Gelierung durch Zusammenfügen solcherart beschichteter Glasscheiben oder gegebenenfalls auch Kunststoffscheiben, z.B. aus Polymethylmethacrylat, Polyvinylchlorid, Polycarbonat, Celluloseester, aromatischen Polyestern oder Polyurethan, Schicht auf Schicht oder Glas auf Schicht den Verbund herzustellen, wobei gegebenenfalls auch bei 0 bis 120°C, vorzugsweise 15 bis 80°C, verpreßt werden kann. Bei Mitverwendung von Kunststoffscheiben werden diese vorteilhafterweise im Inneren des Verbundes angeordnet.

Die Herstellung der Gelbildner, die als fließfähige Vorprodukte bezeichnet werden können, kann vorzugsweise so erfolgen, daß man eine möglichst klare Lösung des Aluminiumphosphates mit gegebener Konzentration kontinuierlich oder chargenweise einem Mischaggregat zuführt, z.B. einem Rührkessel, einem Statikmischer oder einem kontinuierlich arbeitenden Mischkopf, wie er aus der Mehrkomponenten-Polyurethanchemie bekannt ist, und dort mit dem jeweiligen Aminoalkohol vermischt.

Die Reaktionskomponenten kommen vorzugsweise mit Raumtemperatur zum Einsatz. Beim Vermischen wird nach Beendigung der dabei erfolgten Umsetzung eine meist Klare, durch die freiwerdende Reaktionswärme erwärmte Produktlösung erhalten. Diese wird vorzugsweise sofort anschließend auf Temperaturen unter 45°C, vorzugsweise unter 35°C, abgekühlt, wofür man beispielsweise einen Zeitraum von weniger als 60 Minuten, vorzugsweise von weniger als 20 Minuten, einhält. Die so erhaltenen Lösungen sind für mehr als 24 Stunden bei 5 bis 30°C fließfähig. Sie können in diesem Zustand gegebenenfalls mit Zusatzkomponenten vermischt und/oder gelagert und dann der Verwendung zugeführt werden.

Wenn die Gelbildner oder die Gele wasserfrei oder weitgehend wasserfrei vorliegen, können sie bei Temperaturen zwischen beispielsweise 90 und 170°C, vorzugsweise zwischen 110 und 150°C, thermoplastisch zu Folien oder Formteilen verarbeitet werden, die dann ebenfalls als Verbundglaszwischenschichten verwendet werden können.

Im folgenden wird die Erfindung beispielhaft erläutert. Die angegebenen Teile und Prozente beziehen sich auf das Gewicht, sofern nichts anderes vermerkt ist.

### Beispiel 1

a) Herstellung einer Phosphatlösung
   Handelsübliches Aluminiumhydroxid (468 Teile) wurde in einem Gemisch aus entsalztem Wasser (247 Teile) und 85 %iger ortho-Phosphorsäure (2075 Teile) dispergiert Unter Rühren wurde auf 130°C erhitzt (Heizbadtemperatur) bis nach 30 Minuten eine Klare Lösung entstanden war. Diese hatte einen Feststoffgehalt von 80 %. Sie kann gegebenenfalls mit entsalztem Wasser auf niedrigere Konzentrationen verdünnt werden.
b) Herstellung eines Gelbildners
   100 Teile einer auf 50 % eingestellten Phosphatlösung (erhalten gemäß a)) wurden in einem Rührgefäß bei 22°C mit 27,8 Teilen Ethanolamin intensiv vermischt. Unter Erwärmung auf 70°C bildete sich eine Klare Lösung. Diese wurde durch Wasserkühlung innerhalb von 18 Minuten auf 22°C abgekühlt. Es wurde eine bei 22°C mehr als 48 h leicht fließende Klare Produktlösung mit einem pH-Wert von 6 erhalten.
c) Herstellung eines Gels
   100 Teile der 22°C warmen Lösung des Gelbildners (erhalten gemäß b)) wurden in die Zwischenräume eines vorfabrizierten Dreischeibenverbundglases aus Fensterglas blasenfrei eingefüllt. Die mit dem Gelbildner zu füllenden Zwischenräume hatten eine lichte Weite von 4,5 mm. Anschließend wurde die gefüllte Verbundglaskonstruktion in einem auf 70°C eingestellten Heizschrank 15 Stunden getempert. Dann wurde der Verbund dem Schrank entnommen und langsam abgekühlt. Der Verbund war Klar durchsichtig und die Zwischenschichten geliert, d.h. nicht mehr fließfähig.
d) Brandprüfung
   Der gemäß c) erhaltene 3-Scheibenverbund wurde in einer Größe von 50 x 50 cm in das Prüffeld eines Kleinbrandofens eingebaut, der in Anlehnung an DIN 4102 betrieben und entsprechend der Einheitstemperaturkurve (ETK) aufgeheizt wurde. Bei einer Ausgangstemperatur von 34°C auf der flammenabgewandten Außenfläche des Verbundes wurde berührungslos über ein IR-Temperaturmeßgerät nach 31 Minuten eine Temperatur von 160°C gemessen. Nach 130 Minuten betrug die Temperatur 465°C. Die flammenabgewandte Glasscheibe zersprang nicht, der Verbund war optisch geschlossen und der Raumabschluß gewahrt. Nach dem Ausbau der Verbundkonstruktion zeigte sich, daß die flammenseitige Fläche in ein weißes keramisches Material überführt worden war.

### Beispiel 2

100 Teile 20 %ige Phosphatlösung, erhalten gemäß Beispiel 1a), wurden intensiv mit 12 Teilen Ethanolamin vermischt. Die erhaltene klare Lösung wurde auf 18°C abgekühlt. Sie blieb über 40 Stunden gut fließfähig. Mit der Lösung wurde, nachdem sie mit 15 % Glasflakes vermischt und im Vakuum entgast worden war, ein Glaszylinder mit 2,5 cm Durchmesser gefüllt, der anschließend 12 Stunden in einem Umluftschrank bei 80°C getempert wurde. Das Material in dem Zylinder erstarrte dabei zu einem Gel und floß nicht mehr aus dem Zylinder aus, wenn er auf den Kopf gestellt wurde.

### Beispiel 3

100 Teile 80 %ige Phosphatlösung, erhalten gemäß Beispiel 1a), wurden intensiv mit 43 Teilen Ethanolamin vermischt. Die erhaltene klare Lösung wurde auf 20°C abgekühlt. Sie blieb über 40 Stunden fließfähig. Mit dieser Lösung wurde ein Glaszylinder mit 2,5 cm Durchmesser gefüllt, der anschließend im Umluftschrank 12 Stunden bei 75°C getempert wurde. Das Material in dem Zylinder erstarrte dabei zu einem nicht mehr fließenden Gel.

### Beispiel 4

100 Teile 50 %ige Phosphatlösung, erhalten gemäß Beispiel 1a), wurden mit 24 Teilen Diethanolamin intensiv vermischt. Die klare dünnflüssige Lösung wurde auf 20°C gekühlt. Sie blieb so über mehr als 40 Stunden fließfähig. Beim Tempern (15 Stunden, 80°C) ging sie in ein nicht mehr fließendes, weiches und klares Gel über.

### Beispiel 5

Eine Fensterglasscheibe wurde mit dem fließfähigen Umsetzungsprodukt mit Ethanolamin, erhalten gemäß Beispiel 3, 3 mm hoch beschichtet und in einem Umluftschrank bei 80°C bis zur Gewichtskonstanz getempert. Danach befand sich auf der Scheibe eine nahezu wasserfreie, klare und nicht mehr fließende Beschichtung. Dann wurde diese Glasscheibe mit einer zweiten, 3 mm dicken Scheibe aus feuerfestem Glas (Duran®) zu einem Zweischeibenverbund zusammengefügt, so daß die Beschichtung als Zwischenschicht vorlag.

In der Brandprüfung entsprechend Beispiel 1d) blieb mit dieser Konstruktion über 120 Minuten der Raumabschluß bestehen, nach 8 Minuten war die Scheibenkonstruktion, bei der die Fensterglasscheibe flammenseitig angeordnet war, undurchsichtig geworden, so daß der Durchtritt von Flammenstrahlung durch die Scheibe behindert wurde.

### Beispiel 6

4150 Teile 85 %ige ortho-Phosphorsäure wurden mit 490 Teilen Wasser und 936 Teilen Aluminiumhydroxid 1 Stunde bei Rückfluß gerührt. Es entstand eine klare Lösung des Salzes aus 3 Mol ortho-Phosphorsäure und 1 Mol Aluminiumhydroxid. Die Lösung war bei Raumtemperatur gut fließend.

In einem Edelstahlkessel mit Kühlvorrichtung wurden 5000 Teile der obigen 80 %igen Lösung bei Raumtemperatur vorgelegt. Unter gutem Rühren und gleichzeitiger Kühlung wurden 2400 Teile Ethanolamin so schnell zugegeben, daß die Reaktionstemperatur bei 80°C gehalten werden konnte. Die entstandene klare Lösung wurde dann im Verlaufe von 15 Minuten auf 35°C und schließlich auf Raumtemperatur abgekühlt. Man erhielt eine gut fließfähige klare Lösung, die auch noch nach 50 Stunden bei Raumtemperatur fließfähig war. Die so hergestellte 85 %ige Lösung wurde in vier gleiche Teile geteilt. Ein Teil blieb unverdünnt, je einer der anderen Teile der Lösung wurde auf 25, 50 und 75 % verdünnt. Diese vier Lösungen wurden jeweils in ein weites Reagenzglas mit 75 ml Fassungsvermögen eingefüllt, mit Aluminiumfolie verschlossen und für 12 Stunden in einen auf 80°C vorgeheizten Heizschrank eingestellt. Dabei gingen alle Lösungen vom fließfähigen in den auch bei 80°C stabilen Gelzustand über. Die konzentrierteren Gele waren Klar durchsichtig, lediglich bei der 25 %igen Lösung war ein sehr schwach getrübtes Gel entstanden.

### Beispiel 7

In einen, Dreischeibenverbund der Maße 50 x 50 cm mit Scheibenabständen von 3,5 mm wurde in die erste Zwischenschicht die wie in Beispiel 7 beschrieben erhaltene 75 %ige Lösung und in die zweite Zwischenschicht die 50 %ige Lösung eingegossen. Anschließend wurde der Verbund für 12 Stunden auf 70°C erwärmt, wobei die Zwischenschichten gelierten.

In der Ofenprüfung entsprechend Beispiel 1d), bei der das 50 %ige Gel flammenseitig eingebaut wurde, wurde die Feuerwiderstandsklasse F 30 (in Anlehnung an DIN 4102) erreicht.

## Patentansprüche

1. Verwendung von Brandschutzgelen auf der Basis von Aminsalzen saurer Phosphate, die eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden, die bei Erhitzen auf Temperaturen über 45°C in weniger als 24 Stunden in ein durchsichtiges Gel übergeht, für Brandschutzverglasungen.

2. Verwendung nach Anspruch 1, dadurch gekennzeichnet, daß die Aluminiumkomponente Aluminiumhydroxid, die Phosphorkomponente ortho-Phosphorsäure und die Aminkomponente Anlagerungsprodukte von Epoxiden an Ammoniak, primäre und/oder sekundäre Mono- und/oder Polyamine sind.

3. Verwendung nach Ansprüchen 1 und 2, dadurch gekennzeichnet, daß die Brandschutzgele auf der Basis von Aminsalzen saurer Phosphate hergestellt worden sind, indem man aus einer Aluminiumverbindung und ortho-Phosphorsäure ein saures Aluminiumphosphat herstellte und dieses in 20 bis 85 gew.-%iger wäßriger Lösung mit einem Aminoalkohol umsetzte, wobei folgende Mengenverhältnisse eingehalten wurden
- pro Mol Aluminiumverbindung 2 bis 4 Mol ortho-Phosphorsäure und
- pro 100 Gramm saures Aluminiumphosphat in 20 bis 85 gew.-%iger wäßriger Lösung 0,5 bis 1,5 Mole Aminoalkohol.

4. Verwendung nach Ansprüchen 1 bis 3, dadurch gekennzeichnet, daß die Brandschutzgele hergestellt worden sind, indem man ausgehend von einer 20 gew.-%igen wäßrigen Lösung eines Aluminium-tris-Phosphates pro 100 Gew.-Teile Phosphat-Feststoff 45 bis 65 Gew.-Teile Ethanolamin eingesetzt hat, ausgehend von einer 80 gew.-%igen wäßrigen Lösung eines Aluminium-tris-Phosphates 30 bis 70 Gew.-Teile Ethanolamin pro 100 Gew.-Teile Phosphat-Feststoff eingesetzt hat und bei anderen Konzentrationen an Aluminium-tris-Phosphat-Lösungen Ethanolaminmengen eingesetzt hat, die sich durch lineare Interpolation zwischen den obengenannten Eckdaten ergeben.

5. Verwendung nach Ansprüchen 1 bis 4, dadurch gekennzeichnet, daß man bei der Herstellung der Brandschutzgele als Aminoalkoholkomponente Anlagerungsprodukte von Epoxiden an Ammoniak, primäre und/oder sekundäre, aliphatische, aromatische und/oder araliphatische Mono- und/oder Polyamine, insbesondere Ethanolamine und davon insbesondere Mono-Ethanolamin eingesetzt hat.

6. Verwendung nach Ansprüchen 1 bis 5, dadurch gekennzeichnet, daß man die Brandschutzgele in Zwischenschichten in Verbundglaskonstruktionen mit Brandschutzwirkung einsetzt.

7. Verwendung nach Ansprüchen 1 bis 6, dadurch gekennzeichnet, daß den Brandschutzgelen vor der Gelierung, Füllstoffe, Farbgeber, Lichtschutzmittel, Radikalfänger, Substanzen mit speziellen Absorptionseigenschaften zur Erzielung von Filter- oder Verdunkelungseffekten im elektromagnetischem Spektrum, Metallpulver, Metallfasern, Metallflakes, Cellulose, Stärke, Zucker, Polyole, Fotochromiebildner, Nucleierungsmittel, Biocide und/oder Geruchstoffe in Mengen von insgesamt 0 bis 60 Gew.-% zugesetzt wurden.

8. Verwendung nach Ansprüchen 1 bis 7, dadurch gekennzeichnet, daß man die Vorstufe des Brandschutzgels fließfähig bei Temperaturen unter 30°C herstellt, diese gegebenenfalls filtriert und/oder entgast, dann zwischen die Scheiben eines vorfabrizierten Scheibenglasverbundes blasenfrei eingießt und bei 50 bis 120°C das fließfähige Vorprodukt zur Gelierung bringt oder den Gelbildner auf Glasplatten plan aufgießt und vor oder nach erfolgter Gelbildung durch Zusammenfügen solcherart beschichteter Glasscheiben oder Kunststoffscheiben Schicht auf Schicht oder Glas auf Schicht einen Verbund herstellt, den man gegebenenfalls bei 0 bis 120°C verpreßt.
